# EUROPEAN PATENT APPLICATION

(11) **EP 4 088 685 A1**
(43) Date of publication of application: **16.11.2022**
(21) Application number: 21173235.9
(22) Date of filing: 11.05.2021
(51) Int. Cl.: A61C 19/06

(54) **DISPENSER**

(71) Applicant: medmix Switzerland AG, 9469 Haag (Rheintal) (CH)
(72) Inventor: The designation of the inventor has not yet been filed
(74) Representative: Manitz Finsterwald Patent- und Rechtsanwaltspartnerschaft mbB

(57) **Abstract**

The present invention relates to a dispenser for dispensing 1 K materials, the dispenser comprising a housing, one or more nozzles for dispensing a 1K material and attached to the housing, one or more reservoirs for storing a respective 1K material arranged within a housing of the dispenser, one or more material driving assemblies configured to act on a respective one of the one or more reservoirs to drive the respective 1K Material out of respective one of the one or more nozzles, with the one or more material driving assemblies at least partly being arranged within the housing.

## Description

The present invention relates to a dispenser for dispensing 1 K materials, the dispenser comprising a housing, one or more nozzles for dispensing a 1K material and attached to the housing, one or more reservoirs for storing a respective 1K material arranged within a housing of the dispenser, one or more material driving assemblies configured to act on a respective one of the one or more reservoirs to drive the respective 1 K Material out of respective one of the one or more nozzles, with the one or more material driving assemblies at least partly being arranged within the housing.

Applicators are well known, particularly in the dental and medical field for treating e.g. a patient's gums, a patient's teeth, spaces between the teeth or the like. The applicators can be used to apply fluids, such as cremes, medicinal fluids, etching materials, adhesives, ointments and the like to parts of a patient's mouth or body.

For carrying out the various tasks, the applicators generally have an application tip that is configured to carry out the precise application. For example, brushes are known for cleaning between a patient's teeth, also foams are also known for applying a dental or medical fluid at an area of the mouth including the teeth. Moreover, cannulas are known for applying 1K material at teeth. Particularly with regard to hard to reach areas of the mouth it is desirable to provide an applicator that can be deformed for the specific application and that reliably maintains its shape after deformation.

In order to apply the 1K material to a patient's mouth via the applicator, the 1K material has to be made available at the applicator. Dispensers are known for this purpose. Typically dispensers are formed as disposable devices that are discarded once the material stored therein has been dispensed. Moreover, it is not recognisable how much material is still present in these dispensers. It is also the case that the dispensers are not typically designed for single handed use which makes the task of the dental professional or medical professional using the dispenser more arduous.

It is therefore an object of the invention to make available a re-usable dispenser in which waste and in particular plastic waste can be significantly reduced and which is preferably capable of providing pre-determined doses of 1K material. It is a further object of the invention to provide a dispenser that is simple to use and preferably simple to clean and disinfect that optionally provides feedback to a user thereof of the state of use of the dispenser.

This object is satisfied by a dispenser in accordance with claim 1.

Such a dispenser, e.g. a dental dispenser, for dispensing 1K materials, in particular 1K dental materials, comprises a housing, one or more nozzles for dispensing one or more respective 1K materials, the one or more nozzles being attached to the housing, one or more reservoirs for storing the respective 1K material, the one or more reservoirs being arranged within the housing of the dispenser,
one or more material driving assemblies configured to act on a respective one of the one or more reservoirs to drive the respective 1K Material through a respective one of the one or more nozzles, with the one or more material driving assemblies at least partly being arranged within the housing.

In this way an easy to handle and dosable dispenser is made available. The dispenser is preferably also self-explanatory to a user thereof and capable of enabling one handed use for efficiency of dispensing of materials.

The one or more nozzles may comprise at least one of a canula, an applicator, e.g. a brush, micro brush etc., an outlet for e.g. dispensing predefined volumes of 1K Material, e.g. in the form of drops, and combinations of the foregoing. In this way the 1K material can be applied and/or dispensed in a simple manner.

The nozzle may be one of a nozzle repeatedly detachable to and from the dispenser, e.g. via first and second connections means and a nozzle fixed to the dispenser. By providing replacable nozzles, different nozzles can be attached as applicators to enable different use cases, e.g. for the treatment of bigger and smaller cavities.

Selecting e.g. a thread or a Luer lock as the first and second connection means enables a fast, simple and efficient means of replacing the nozzle.

The one or more material driving assemblies may comprise one or more members selected from the group of members comprising a plunger, a driver, e.g. a mechanical drive, an electric drive, a pressurized gas drive, one or more pumps, one or more valves, one or more piezo elements and combinations of the foregoing. Such components enable the precise dosing of materials to be dispensed.

The dispenser may further comprise a sensor assembly for sensing an applicator in the proximity of one of the one or more nozzles; and/or for sensing one or more parameters of the dispenser and/or of the environment of use of the dispenser. Using such sensor assemblies e.g. to initiate the dispensing of materials enables a fast, simple and efficient way of using the dispenser. Such sensor assemblies may comprise RFID technology, magnetic sensor assemblies, bar codes, QR codes, light barriers or the like. In this connection the sensors may be pressure sensors, temperature sensors, position sensors and/or proximity sensors or the like.

If a dispenser with several nozzles is provided that supply several kinds of 1 K material, the nozzle of a specific kind of 1K material can be activated if a user brings a specific kind of applicator, e.g. having a specific RFID code, magnetic coding etc. into the proximity of the nozzle without having to press any buttons for ease of use of the dispenser.

The sensor assembly may comprise a position resolving sensor and/or several individual sensors, with areas of the position resolving sensor and/or the individual sensors of the sensor assembly then optionally being associated with a respective one of the one or more nozzles. If a dispenser with several nozzles is provided that supply several kinds of 1K material, the nozzle of a specific kind of 1K material can be activated if a user brings an applicator into the proximity of the nozzle without having to press any buttons for ease of use of the dispenser.

The dispenser may further comprise a control unit arranged within the housing, the control unit being configured to initiate an activation of the one or more material driving assemblies to act on one of the one or more reservoirs to dispense the respective 1K material via said one of the one or more nozzles. In this way the digital information obtained by the sensor assembly can be processed in a fast and efficient way to dispense the desired 1K material.

The control unit may further be configured to sense the presence of an applicator in the region of one of the one or more nozzles, i.e. the control unit may be able to sense the actuation of e.g. an actuator associated with the dispenser or the presence of an applicator in the proximity of the dispenser. In this way an easy to handle and dosable dispenser is made available. The dispenser is preferably also self-explanatory to a user thereof and capable of enabling one handed use for efficiency of dispensing of materials.

In this connection it should be noted that the control unit may be configured to process signals detected by sensors associated with the dispenser. Such sensors may comprise pressure sensors, temperature sensors, position sensors and/or the sensor assembly.

The control unit can process the information conveyed by the signal and obtained by these sensors to alert a user of the dispenser that e.g. that a dispensing speed needs adjusting, that a 1K material stored in a respective reservoir is running low, that a temperature of the respective 1K material is too high or too low, that a component of the material driving assemblies is at a wrong position, that an applicator is in the proximity of the dispenser etc.

The control unit may further be configured to sense the presence of an applicator in the region of one of the one or more nozzles on the basis of signals transmitted from the sensor assembly to the control unit. In this way no specific code has to be present at the applicator and the dispenser merely detects an object in the proximity of a nozzle and recognizes this object as the desired applicator for ease of use.

A dosing of the 1K material may be made available by sensing the time the applicator is present at the dispenser and dispensing material for this period of time.

The dispenser may further comprise an activator, such as a button or lever, the activator then optionally being associated with a respective one of the one or more nozzles for activating one of the one or more material driving assemblies to dispense 1 k material via said one of the one or more nozzles. By providing e.g. a button at a pen-type dispenser the user can simply press the button and therby to initiate the supply of the 1K material to the nozzle for applying the desired 1K material.

The reservoir may be arranged in a chamber of the dispenser, optionally wherein the chamber may be arranged within a cover of the dispenser, optionally wherein the dispenser may further comprise a passage connecting the respective one of the one or more nozzles with a respective chamber.

In this way a simple to manufacture construction of a dispenser is made available in which a contact of the 1K material stored within the reservoir to other components of the dispenser are minimized.

The dispenser may be a pen-type dispenser, and preferably is a reusable pen-type dispenser. Such dispensers are simple to use and preferably with one hand.

In this connection it should be noted that such pen-type dispensers can be provided as an accessory to a dentist chair, with the supply of energy, pressurized air etc. then being provided via a respective interface between the pen-type dispenser and the dentists' chair.

In this connection it should be noted that the pen-type dispenser may be equipped with a window for monitoring the state of use of a container installed therein. In this connection it should be noted that also different kinds of level indicators could be made available to indicate the state of use of a container installed in the dispenser.

It should further be noted that through the appropriate selection of the material driving assemblies, e.g. using an electric motor a stepwise application of the 1K material can be made available, e.g. a dosing function can be made available.

In this connection it should be noted that such a dosing function may also be made available by a valve arranged at the dispenser, with the valve permitting a certain amount of material to pass within a pre-defined unit of time.

Moreover, such a pen-type applicator enables one handed use during application so that a dental professional or the like can hold a mirror or a further applicator in their other hand while using the dispenser.

It should further be noted that such a dispenser is simple to clean and disinfect e.g. it can be autoclavable in apparatus already present in a dental or medical practice.

Such a pen-type dispenser can be used with a variety of applicators connectable thereto for different uses, with only the applicator and the cartridge then having to be replaced between used of the dispenser rather than the complete dispenser as is the case in the prior art.

In this connection it should also be noted that at least one of the reservoir, a cartridge, the dispenser, the applicator the nozzle and combinations of the foregoing may be provided with coding means. Such coding means ensure that the correct type of material is used with the correct type of dispenser and the correct type of applicator.

In this connection it should be noted that the pen-type dispenser and the associated containers may be color coded or coded in another way in order to ensure that the correct containers are inserted into the correct pen-type dispenser. By way of example, the following colors can be used for the color coding, yellow, green, blue, teal, purple, pink, red and brown. By way of example, a yellow color code is used for etching agents, a green color code is used for adhesives, a blue color code is used for topical medications, a teal color code is used for a whitening agent, a green color code is used for flurinizing agents, a purple color code is used for cremes, a pink color code is used for medicinal fluids, a brown color code is used for ointments etc.

In this connection it should be noted that the replacable nozzles may also be color coded for the different types of applications, e.g. a micro brush may be coded with the color blue for application of topical medications, a green color code may be provided for use with foams for applying fluorine comprising agents etc.

The dispenser may be a dispensing station, such as a dispensing station configured to be installed at a dental unit, i.e. a dentists' chair. In this connection the dispenser may comprise a plurality of nozzles for different materials. By way of example the dispenser may comprise between one, two, three, four and eight different nozzles for different kinds of 1K materials, with respective reservoirs and material driving assemblies likewise being provided.

In this connection it should be noted that the color coding mentioned in the foregoing may be used also for the dispensing stations. It should also be noted that the applicator associated with a respective nozzle and 1K material may also be color coded so that the dental or medical professional knows that e.g. a micro-brush applicator intended to apply topical medications may be color coded in blue and the nozzle of the dispenser is then likewise color coded in blue etc.

In use the dispenser is simple to use as a dental or medical professional simply has to hold the applicator beneath a nozzle of the dispenser in order to retrieve a 1K material.

In this way also a contact of the applicator with the dispenser is avoided, such that the dispenser can be cleaned in a fast and efficient manner, e.g. by simply using a disinfectant wipe between uses negating the use of an autoclave on a regular basis.

The housing of the dispenser may comprise a lid as the cover pivotable relative to a base of the housing to enable access to chambers for storing the reservoirs. The provision of a lid as a cover enables a reservoir to be refilled in a simple and efficient manner with a fresh container once a material stored therein has been dispensed.

The control unit may be configured to control and/or to regulate at least one of the material driving assemblies, the one or more nozzles the driver, the one or more pumps, the one or more valves, the one or more piezo elements, parameters relating to the foregoing and combinations of the foregoing. In this way the correct amount of 1K material can be dispensed in a controlled and/or regulated manner in order to avoid excessive use of materials that then have to be discarded.

The one or more reservoirs may each be filled with a dental 1K material, such as an adhesive, an etching agent, a cleaning agent, a whitening agent, a topical agent, medicinal fluids, cremes, ointments etc. Such materials are typically found in a dental or medical practice and used by the corresponding dental or medical professional in the treatment of patients.

At least one of the one or more reservoirs may be formed by a replacable container, such as a sachet, a cartridge, and a barrel.

In this connection the replacable container can be inserted into the dispenser via the lid, at the middle of the dispenser between a proximal and a distal end of the dispenser, either from above into a top side of the dispenser (the side at which the button is arranged) or from the side, i.e. a side directly adjacent to the top side, via a slider or flap. Alternatively the cartridge can be inserted between the middle and the distal end in a manner similar to a fountain pen. Further alternatively the cartridge can be inserted via the proximal end.

Such replacable containers simplify the use of the dispenser. In this way the dispenser can be refilled in a fast, facile and cost effective manner.

The dispenser may comprise a filling level indicator. Such an indicator can indicate a continuous change in the filling level e.g. using a scale present at e.g. a window of the dispenser, with the window showing the reservoir, or by sensing the amount of material left using a sensor and then transmitting a visible or audible signal via the control unit to the user of the dispenser.

According to a further aspect this object is satisfied by a method of preparing a dental dispenser, the method comprising the steps of:
providing a dispenser having a filling indicator,
inserting a container into the dispenser,
monitoring the amount of material stored in the dispenser, and optionally
dispensing material stored in the dispenser following activation of the dispenser via an activator thereof.

In this way a dispenser can be made available that is prepared for use in a fast, facile and cost effective manner.

Further embodiments of the invention are described in the following description of the figures and/or the dependent claims attached to this specification. The invention will be explained in the following in detail by means of embodiments and with reference to the drawing in which is shown:
- Fig. 1: a perspective view of first kind of pen-type dispenser and replacable containers and hubs with various applicators;
- Fig. 2: a perspective view of second kind of pen-type dispenser;
- Fig. 3: a perspective view of a first kind of dispensing station and of an associated applicator;
- Fig. 4: a side view of the dispensing station of Fig. 3;
- Fig. 5: a block diagram showing components of a dispenser;
- Fig. 6: a block diagram showing components of a further dispenser;
- Fig. 7: a block diagram showing electronic components of a dispenser;
- Fig. 8: a block diagram showing electronic components of a further dispenser; and
- Fig. 9: a perspective view of a second kind of dispensing station and of an associated applicator.

In the following the same reference numerals will be used for parts having the same or equivalent function. Any statements made having regard to the direction of a component are made relative to the position shown in the drawing and can naturally vary in the actual position of application.

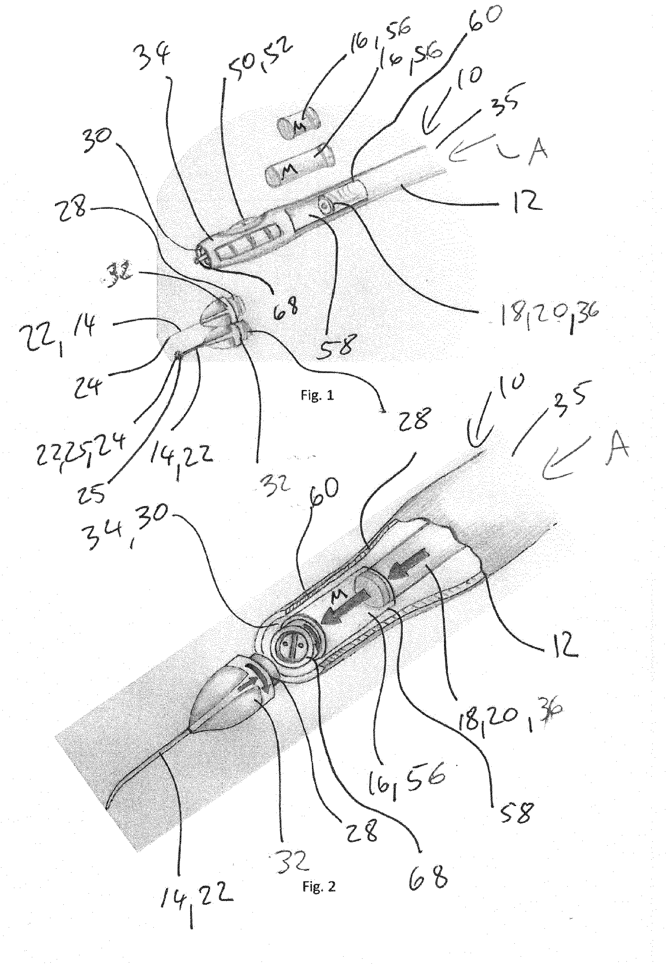

Fig. 1 shows a perspective view of first kind of pen-type dispenser 10 and replacable containers in the form of cartridges 56 as reservoirs 16 that can be inserted into the pen-type dispenser 10. Also shown are replacable hubs 32 that can be connected to dispenser 10 to repeatedly detach and re-attach nozzles 14 to and from the dispenser 10. The hubs 32 can be equipped with various applicators 24, such as a cannula 22 and/or a brush 25, such as a micro-brush. Also a foam type applicator (not shown) or other kind of applicator may be made available.

The Hub 32 comprises first connection means 28, e.g. an outer thread (Fig.1) or a part of a Luer Lock (Fig. 2) via which the hub 32 can be connected to the dispenser 10.

A proximal end 34 of the housing 12 comprises second connection means 30, e.g. an inner thread (Fig. 1) or a socket of a Luer Lock (Fig. 2) which are capable of engaging the corresponding first connection means.

In this connection it should be noted that the first and second connection means 28, 30 can also be used to code the dispensers in order to e.g. avoid cross-contamination between different applicators intended for different 1K materials.

Such pen-type dispensers generally have an elongate shape extending along a longitudinal axis A between the proximal end 34 and a distal end 35 of the dispenser 10.

In this connection it should be noted that proximal refers to that part of the dispenser 10 that in use thereof is closer to the patient and distal refers to that part of the dispenser 10 that in use thereof is further away from the patient.

Fig. 2 shows a perspective view of second kind of pen-type dispenser 10. Like the dispenser 10 of Fig. 1 the dispenser 10 of Fig. 2 is a reusable pen-type dispenser.

The dispenser 10 comprises a housing 12, and the nozzle 14 for dispensing a 1K material M, the nozzle 14 being attached to the housing 12 via the first and second connection means 28, 30. The dispenser 10 further comprises a reservoir 16 for storing the 1K material M, the reservoir 16 being arranged within the housing 12 of the dispenser 10. The dispenser 10 also comprises a material driving assembly 18 configured to act on the reservoir 16 via a plunger 20 to drive the respective 1K Material M through the nozzle 14, with the material driving assembly 18 at least partly being arranged within the housing 12.

The reservoir 16 is arranged in a chamber 58 of the dispenser, with the chamber 58 being arranged within a cover 60 of the dispenser 10.

The cover 60 is generally a part of the housing 12 and can be a part detachable from the housing 12 via a screw-type connection in a manner similar to a fountain pen for replacement of the cartridge 56.

In an alternative design the cover 60 may be a hatch that can be moved relative to the housing 12, e.g. in a sliding arrangement or a pivotable arrangement to permit access to the chamber 58 for replacement of a spent cartridge 56.

In a further alternative design the cartridge 56 could be inserted via the proximal end 34 via the second connection means 30 once the nozzle 14 has been removed from the dispenser 10.

A window may be present in the housing 12 of the dispenser 10, with the window showing a contents of a respective cartridge 56 inserted into the dispenser 10.

As indicated in Fig. 1, the dispenser 10 further comprises a passage 68 connecting the nozzle 14 with the chamber 58. The material is guided from the cartridge to the proximal end of the nozzle 14 via this passage 68 without coming into contact with other parts of the dispenser 10.

In order to activate the dispenser this further comprises an activator 50 in the form of a button 52. The activator 50 is associated with the nozzle 14 and the material driving assembly 18 for activating a movement of the material driving assembly 18 to dispense the material M via the nozzle 14 while the button 52 is pressed.

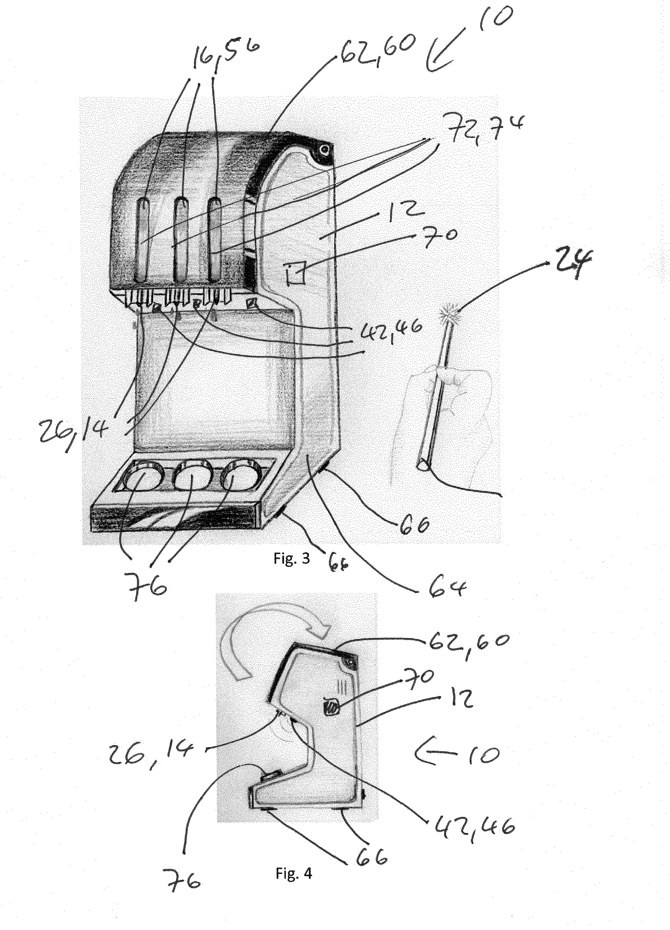

Fig. 3 shows a perspective view of a first kind of dispensing station as the dispenser 10 and of the associated applicator 24 arranged at a handle 66. The dispensing station may optionally be configured to be installed at a dental unit, i.e. a dentists' chair (not shown).

In this connection the handle 66 may be a rod at which a respective applicator 24 is attached for applying the material M in a patients' mouth.

The dispenser 10 comprises three nozzles 14 as outlets 26 for dispensing three respective 1K materials M from three different reservoirs 16, with the three nozzles 14 being attached to the housing 12 and connected or connectable to the reservoirs 16 that are arranged within the housing 12.

The dispenser 10 further comprises three different material driving assemblies 18 configured to act and cooperate with the three reservoirs 16 to drive the respective 1K Material M through a respective one of the three nozzles 14. The material driving assemblies 18 are completely arranged within the housing 12.

In order to replace the containers of the dispenser 10 this comprises a lid 62 as the cover 60. The lid 62 is pivotable relative to a base 64 of the housing 12 to enable access to chambers 56 for storing the reservoirs 16.

The base 64 comprises three drip pans 76 for catching excess material M that may drip from the respective outlet 26. In this connection ti should be noted that rather than having one drip pan 76 per nozzle, the base may comprise a single drip pan 76 for all nozzles 14 of the dispenser 10.

The dispenser also comprises the activator 50 in the form of a sensor assembly 42 for sensing the applicator 24 in the proximity of one of the three nozzles 14, i.e. beneath the respective nozzle 14 e.g. within one, two or three cms around each nozzle 14, via respective sensors 44 for activating a dispensing of materials M from the dispenser 10.

The sensor assembly 42 may comprises a position resolving sensor and/or several individual sensors 44, with monitoring areas of the position resolving sensor and/or the individual sensors 44 of the sensor assembly 42 being associated with a respective one of the one or more nozzles 14.

The dispenser 10 comprises three filling level indicators 72 in the form of windows 74. The windows 74 may optionally be provided with a scale in order to indicate how full the respective reservoir 16 is.

The indicators 72 indicate a continuous change in the filling level e.g. using a scale present at the window 74 or simply by showing full/empty reservoirs 16 via the windows 74. It is also possible that the further sensor 70 is capable of detecting a filing level and then transmitting a signal related thereto to the control unit 46 that then initiates a visible or audible signal to the user of the dispenser 10.

In this connection it should be noted that the dispenser 10 shown in connection with Figs. 1 and 2 may also comprise a filling level indicator 72 either in the form of a window or as a visible or audible signal output by the control unit 46.

Fig. 4 shows a side view of the dispenser 10 of Fig. 3. The dispenser 10 comprises feet 64 on which the dispenser can stand. If the dispenser is to be attached at a dental unit, i.e. a dentists' chair, then the feet 64 are removed and the dispenser 10 is attached to the dental unit via e.g. a screwed connection in order fix the dispenser 10 the dental unit. The nozzles 14 are fixed to the dispenser 10 as an outlet 26.

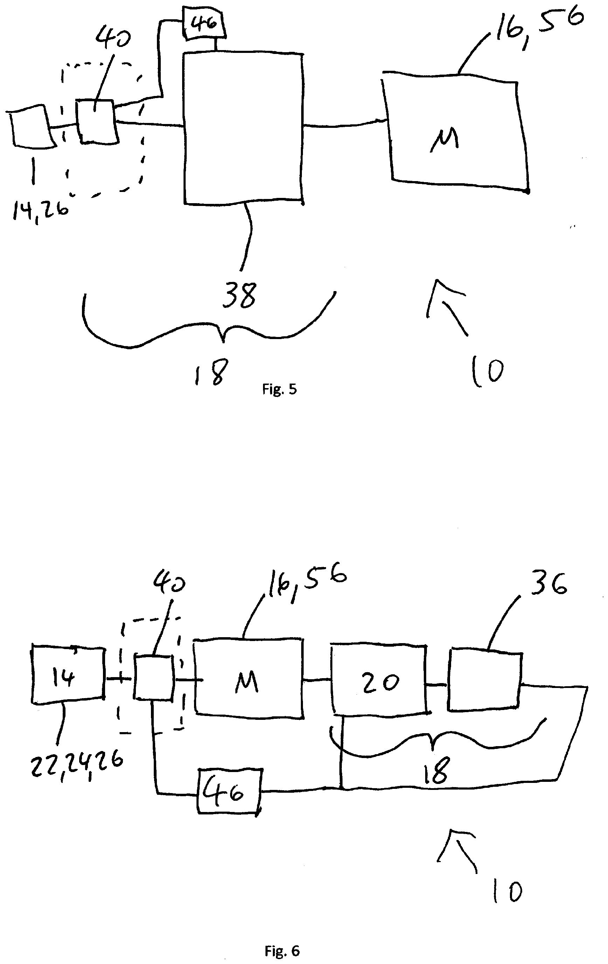

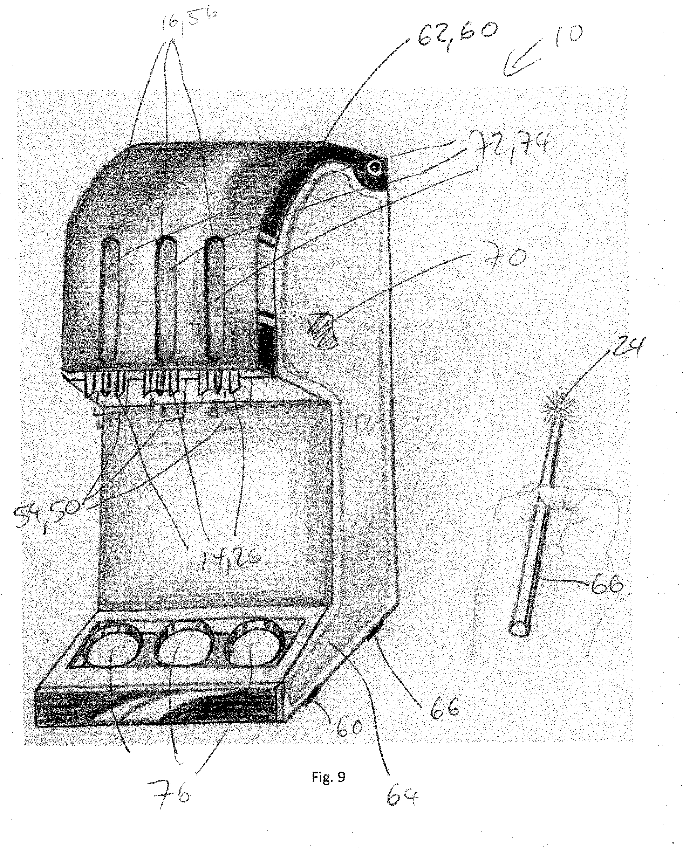

Fig. 5 shows a block diagram showing components of the dispenser 10. The dispenser 10 can either be a pen-type dispenser as shown e.g. in Figs. 1 and 2 or a dispensing station as shown in Figs. 3 and 9.

The dispenser 10 comprises a control unit 46 arranged within the housing 12. The control unit 12 is configured to initiate an activation of the respective material driving assembly 18 to act on the respective reservoir 16 to dispense the respective 1K material M via said nozzle 14 and/or outlet 26.

The material driving assembly 18 comprises a pump 38 optionally connected to a valve 40. On sensing an activation of the dispenser 10 the pump is driven in order to dispense material M from the reservoir 16.

The valve may be a dosage valve 40 that permits the through flow of a pred- determined amount of material M per unit time in order to dispense the either a pre-determined amount if material M, or an amount defined by the duration the activator 50 is activated in use of the dispenser 10. The control unit 46 can control and regulate the respective components of the dispenser 10.

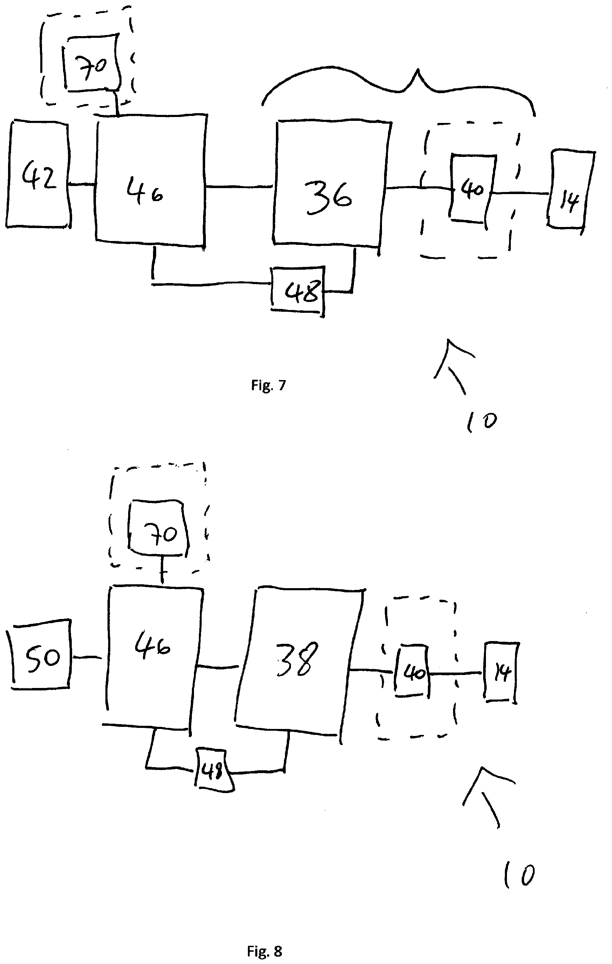

Fig. 6 shows a block diagram showing components of a further dispenser 10. The dispenser 10 can either be a pen-type dispenser as shown e.g. in Figs. 1 and 2 or a dispensing station as shown in Figs. 3 and 9. The material driving assembly 18 comprises the plunger 20 that is driven by a driver 36. The driver 36 may be an electric drive unit, e.g. an electric motor supplied with energy from a power supply 48 (see Figs. 7 and 8, e.g. present at a dentist's chair), a pneumatic drive unit e.g. driven by pressurized air available at a dentist s chair, or a mechanical drive unit.

On actuation of the activator 50 the control unit 46 activates the material driving assembly 18 by activating the driver 36 to drive the plunger 20 towards and possibly into the container, e.g. the cartridge or a sachet.

In order to regulate an amount dispensed the valve 40 may optionally be provided in a manner similar to the valve 40 mentioned in connection with Fig. 5.

Fig. 7 shows a block diagram showing electronic components of the dispenser 10. The dispenser 10 can either be a pen-type dispenser as shown e.g. in Figs. 1 and 2 or a dispensing station as shown in Figs. 3 and 9.

The control unit 46 is connected to the sensor assembly 42 that comprises the sensor 44 for sensing the presence or absence of the applicator 24. On receiving a signal from the sensor 44 that the applicator 24 is present in the pre-defined proximity of the sensor 44, the control unit 46 initiates an activation of the material driving assembly 18. The material driving assembly 18 shown comprises the driver 36 to drive the material M towards the nozzle 14.

A valve 40 may optionally be present between the driver 36 and the nozzle 14 for controlling and regulating an amount of material M dispensed via the nozzle 14 per unit time. In this connection it should be noted that the valve 40 may be arranged between the reservoir 16 and the nozzle 14, e.g. at the passage 68.

A further sensor 70 may also be provided which provides further parameters and/or signals from the dispenser 10 and/or of the environment of use of the dispenser 10. Such sensors and/or signals may comprise pressure sensors, temperature sensors, position sensors etc.

The power supply can be either a fixed power supply in the form of cables provided at a dentist's chair or in the form of a battery integrated into the pen-type dispenser.

Fig. 8 shows a block diagram showing electronic components of a further dispenser 10. The dispenser 10 can either be a pen-type dispenser as shown e.g. in Figs. 1 and 2 or a dispensing station as shown in Figs. 3 and 9.

The difference between the dispenser 10 of Fig. 7 and Fig. 8 is that rather than using the driver 36 to drive material M out of the reservoir 16 as is the case with Fig. 7, the dispenser 10 of Fig. 8 is provided with the pump 38.

Fig. 9 shows a perspective view of a second kind of dispensing station as the dispenser 10 and of an associated applicator 24 arranged at the handle 66.

The dispenser comprises three nozzles with a lever 54 being arranged at each nozzle as the activator 50 for activating the material driving assembly 18 associated with the respective nozzle to dispense the 1K material M via said nozzle 14 for the desired material M.

For all of the dispensers 10 shown herein the control unit 46 is configured to sense activation of the activator 50 on the basis of signals transmitted from the activator 50 to the control unit 46.

The control unit 46 is configured to control and/or to regulate the various material driving assemblies 18, i.e. the respective drivers 36, the respective pumps 38, the respective valves 40, on the basis of parameters relating to the foregoing and combinations of the foregoing, in order to dispense pre-defined amounts of material M per unit time.

### List of reference numerals:

- 10: dispenser
- 12: housing
- 14: nozzle
- 16: reservoir
- 18: material driving assembly
- 20: plunger
- 22: canula
- 24: applicator
- 25: brush
- 26: outlet
- 28: first connection means
- 30: second connection means
- 32: hub
- 34: proximal end of 12
- 35: distal end of 12
- 36: driver
- 38: pump
- 40: valve
- 42: sensor assembly
- 44: sensor
- 46: control unit
- 48: power supply
- 50: activator
- 52: button
- 54: lever
- 56: cartridge
- 58: chamber
- 60: cover
- 62: base
- 64: foot
- 66: handle
- 68: passage
- 70: sensor
- 72: filling level indicator
- 74: window
- 76: drip pan

- A: longitudinal axis
- M: material

## Claims

1. Dispenser (10) for dispensing 1K materials (M), in particular 1K dental materials (M), the dispenser (10) comprising:
a housing (12),
one or more nozzles (14) for dispensing one or more respective 1K materials (M), the one or more nozzles (14) being attached to the housing (12),
one or more reservoirs (16) for storing the respective 1K material (M), the one or more reservoirs (16) being arranged within the housing (12) of the dispenser (10),
one or more material driving assemblies (18) configured to act on a respective one of the one or more reservoirs (16) to drive the respective 1K Material (M) through a respective one of the one or more nozzles (14), with the one or more material driving assemblies (18) at least partly being arranged within the housing (12).

2. The dispenser (10) according to claim 1,
wherein the one or more nozzles (14) comprises at least one of a canula (22), an applicator (24), an outlet (26) for e.g. dispensing predefined volumes of 1K Material (M), e.g. in the form of drops, and combinations of the foregoing.

3. The dispenser (10) according to claim 1 or claim 2,
wherein the nozzle (14) is one of a nozzle (14) repeatedly detachable to and from the dispenser (10), e.g. via first and second connections means (28, 30) and a nozzle fixed to the dispenser

4. The dispenser (10) according to one of the claims 1 to 3,
wherein the one or more material driving assemblies (18) comprise one or more members selected from the group of members comprising a plunger (20), a driver (36), e.g. a mechanical drive, an electric drive, a pressurized gas drive, one or more pumps (38), one or more valves (40), one or more piezo elements and combinations of the foregoing.

5. The dispenser (10) according to one of the claims 1 to 4,
further comprising a sensor assembly (42) for sensing an applicator (24) in the proximity of one of the one or more nozzles (14); and/or for sensing one or more parameters of the dispenser (10) and/or of the environment of use of the dispenser (10).

6. The dispenser (10) according to claim 5,
wherein the sensor assembly (42) comprises a position resolving sensor and/or several individual sensors (44), with areas of the position resolving sensor and/or the individual sensors (44) of the sensor assembly (42) being associated with a respective one of the one or more nozzles (14).

7. The dispenser (10) according to one of claims 1 to 6,
further comprising a control unit (46) arranged within the housing (12), the control unit (12) being configured to initiate an activation of the one or more material driving assemblies (18) to act on one of the one or more reservoirs (16) to dispense the respective 1K material (M) via said one of the one or more nozzles (14).

8. The dispenser (10) according to claim 7,
wherein the control unit (46) is further configured to sense the presence of an applicator (24) in the region of one of the one or more nozzles (14).

9. The dispenser (10) according to claim 8 and one of claims 5 or 6,
wherein the control unit (46) is further configured to sense the presence of an applicator (24) in the region of one of the one or more nozzles (14) on the basis of signals transmitted from the sensor assembly (42) to the control unit (46).

10. The dispenser (10) according to one of claims 1 to 8,
further comprising an activator (50), such as a button (52) or lever (54), the activator (50) being associated with a respective one of the one or more nozzles (14) for activating one of the one or more material driving assemblies (18) to dispense 1k material (M) via said one of the one or more nozzles (14).

11. The dispenser (10) according to one of claims 1 to 10,
wherein each reservoir (16) is arranged in a chamber (58) of the dispenser (10), optionally wherein each chamber (58) is arranged within a cover (60) of the dispenser, optionally wherein the dispenser (10) further comprises a passage (68) connecting the respective one of the one or more nozzles (14) with a respective chamber (58).

12. The dispenser (10) according to one of claims 1 to 11,
wherein the dispenser (10) is a pen-type dispenser, and preferably is a reusable pen-type dispenser.

13. The dispenser (10) according to one of claims 1 to 12,
wherein the dispenser is a dispensing station, such as a dispensing station configured to be installed at a dental unit, i.e. a dentists' chair.

14. The dispenser (10) according to claim 13,
wherein the housing (12) of the dispenser comprises a lid (62) as the cover (60) pivotable relative to a base (64) of the housing (12) to enable access to chambers (56) for storing the reservoirs (16).

15. The dispenser (10) according to one of claims 4 to 14,
wherein the control unit (36) is configured to control and/or regulate at least one of the material driving assemblies (18), the one or more nozzles (14) the driver (36), the one or more pumps (38), the one or more valves (40), the one or more piezo elements, parameters relating to the foregoing and combinations of the foregoing.

16. The dispenser (10) according to one of claims 1 to 15,
wherein the one or more reservoirs (16) are each filled with a dental 1K material (M), such as an adhesive, an etching agent, a cleaning agent, a whitening agent, a topical agent, medicinal fluids, cremes, ointments etc; and/or
wherein at least one of the one or more reservoirs (16) is formed by a replacable container (56), such as a sachet, a cartridge, and a barrel; and/or
wherein the dispenser (10) comprises a filling level indicator.
